Europäisches Patentamt

European Patent Office

Office européen des brevets

(19)

(11) Numéro de publication: **0 079 274**

**A1**

## (12) DEMANDE DE BREVET EUROPEEN

(21) Numéro de dépôt: **82401997.0**

(22) Date de dépôt: **28.10.82**

(51) Int. Cl.³: **F 16 L 37/22**

(30) Priorité: **10.11.81 FR 8121032**

(43) Date de publication de la demande:
**18.05.83 Bulletin 83/20**

(84) Etats contractants désignés:
**BE CH DE GB IT LI NL SE**

(71) Demandeur: **ETABLISSEMENTS CAILLAU**
**4, rue Béranger**
**F-92100 Boulogne-Billancourt(FR)**

(72) Inventeur: **Calmettes, Lionel**
**3, rue des Glycines**
**F-77330 Ozoir-la-Ferriere(FR)**

(72) Inventeur: **Andre, Michel**
**140 Bis, rue du 8-Mai**
**F-41200 Romorantin(FR)**

(74) Mandataire: **Descourtieux, Philippe et al,**
**CABINET BEAU de LOMENIE 55 rue d'Amsterdam**
**F-75008 Paris(FR)**

(54) **Raccord rapide à verrouillage automatique pour tuyaux ou analogues équipés d'embouts à courses d'encliquetage différentes.**

(57) Raccord rapide à verrouillage automatique dans lequel l'étanchéité à l'accouplement entre une douille (1) et un embout (2) est assurée par un joint torique (13). Ce joint (13) est monté sur une partie (15) non fixe et sollicitée par un ressort (16) prenant appui sur une assise (17).

EP 0 079 274 A1

0079274

1

<u>Raccord rapide à verrouillage automatique pour tuyaux ou analogues</u>
<u>équipés d'embouts à courses d'encliquetage différentes.</u>

L'invention concerne un raccord destiné à l'accouplement de tuyaux, conduits, tubulures ou similaires et plus particulièrement un raccord à verrouillage automatique du type dénommé "raccord rapide" utilisé couramment pour accoupler ou réunir des tuyaux et notamment des tuyaux souples ou flexibles.

Les raccords connus comportent une douille, formant le corps du raccord, destinée à être fixée à l'extrémité de l'un des tuyaux à accoupler, et un embout mâle adapté à l'extrémité de l'autre tuyau et destiné à venir se loger de manière étanche dans la douille.

Des moyens de verrouillage sont logés dans des orifices ou perçages de la douille du raccord, tandis qu'une bague coulisse axialement à l'extérieur de la douille. La bague est sollicitée élastiquement vers une position dans laquelle les moyens de verrouillage sont maintenus en saillie vers l'intérieur de la douille, tandis qu'un coulissement de la bague dans l'autre sens permet un effacement desdits moyens de verrouillage vers l'extérieur de la douille, autorisant ainsi l'introduction ou le retrait de l'embout.

L'embout du raccord est muni d'une gorge annulaire dans laquelle s'engagent les moyens de verrouillage pour assurer le verrouillage réciproque des deux parties du raccord.

Les moyens de verrouillage peuvent être des pistons comme dans le brevet français n° 81.14722, ou bien des billes. Les billes peuvent être au nombre de deux ou plus généralement trois ou quatre pour équilibrer convenablement l'embout dans la douille du raccord.

Avec un raccord comportant une seule rangée de billes, il est nécessaire de déplacer la bague manuellement à l'encontre du moyen élastique pour engager l'embout dans la douille. Ce raccord est donc rapide mais par entièrement automatique.

Pour obtenir un accouplement automatique lors de l'introduction de l'embout, il est connu de prévoir deux rangées de billes décalées axialement l'une par rapport à l'autre.

Au repos une rangée de billes se trouve en face de la portée de la bague et l'autre rangée en face d'une rampe intérieure de la bague de telle sorte qu'au cours de l'introduction de l'embout les billes de cette dernière rangée sont repoussées vers l'extérieur et agissent sur la rampe pour déplacer la bague axialement et permettre l'effacement vers l'extérieur des billes de l'autre rangée et donc l'introduction complète dudit embout.

Avec ce dernier type mentionné, le verrouillage est obtenu par la seule introduction de l'embout, l'action manuelle sur la bague n'étant rendue nécessaire que pour séparer les deux parties du raccord.

L'invention a pour but de proposer un raccord rapide à verrouillage automatique, utilisable avec de nombreux embouts, notamment des embouts présentant des courses d'encliquetage différentes, c'est-à-dire présentant, en avant de la gorge annulaire, des longueurs différentes.

Le raccord rapide selon l'invention comporte une douille destinée à être fixée à l'extrémité de l'un des tuyaux à accoupler et présentant des logements pour recevoir des moyens de verrouillage, une bague montée coulissante axialement sur la douille pour permettre le déverrouillage du raccord ainsi qu'un embout mâle destiné à être adapté sur l'autre tuyau à accoupler, et muni d'une gorge annulaire extérieure adaptée pour recevoir les moyens de verrouillage en position d'accouplement tandis que des moyens sont prévus pour assurer l'étanchéité entre l'embout et la douille en position d'accouplement.

Ce raccord est remarquable en ce que les moyens prévus pour assurer l'étanchéité entre l'embout et la douille, en position d'accouplement, sont montés sur une portée non fixe soumise à une sollicitation élastique prenant appui sur une assise perpendiculaire à l'axe de la douille, ladite portée étant susceptible de coulisser à l'intérieur de la douille.

Selon un mode de réalisation préféré, les moyens d'étanchéité sont constitués par un joint torique et la portée non fixe est constituée par une coupelle sensiblement cylindrique dont le fond est partiellement ouvert.

Il est avantageux que le bord de la coupelle opposé au joint torique soit évasé vers l'extérieur de façon à coopérer avec une butée prévue dans la paroi intérieure de la douille.

Il est également prévu, de préférence, que la sollicitation élastique soit assurée par un ressort spiral coaxial à la douille, prenant appui d'une part dans le fond de la coupelle en regard du joint torique et d'autre part sur ladite assise.

En outre, l'asise du ressort est avantageusement constituée par une grille circulaire insérée dans un évidement annulaire prévu dans la paroi intérieure de la douille. De préférence, cette grille est constituée par une cloison déformable munie d'ouvertures pour le passage du fluide dans le raccord.

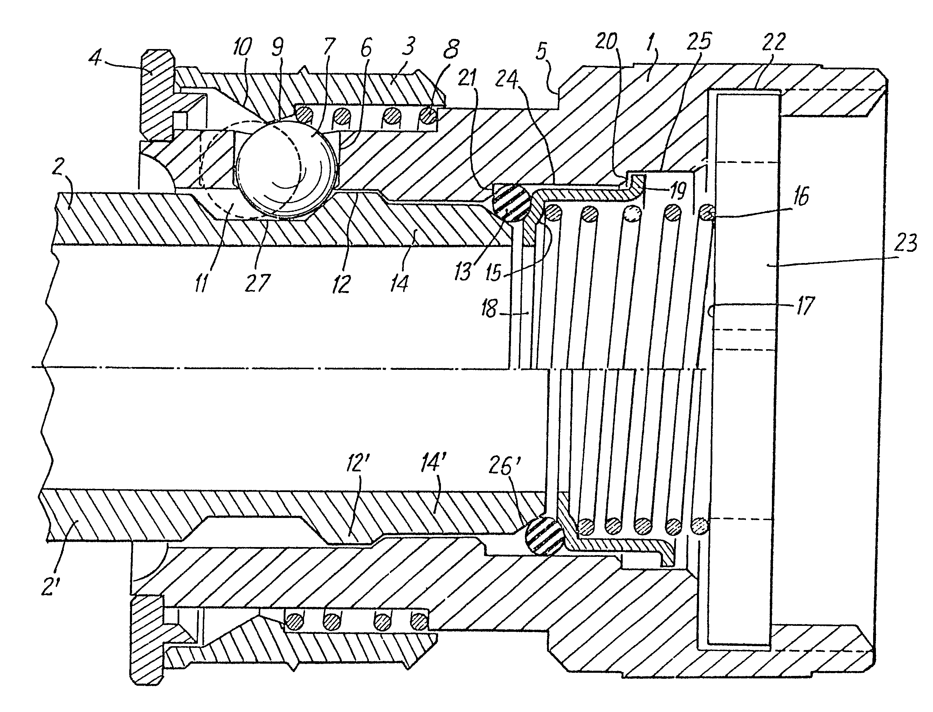

D'autres caractéristiques ressortiront de la description qui suit d'un exemple de réalisation d'un raccord rapide selon l'invention, faite avec référence au dessin annexé sur lequel on peut voir une vue en coupe axiale d'un raccord rapide, la partie supérieure étant relative au cas d'un embout à faible course d'encliquetage, la partie inférieure étant relative au cas d'un embout à course d'encliquetage plus longue.

La figure montre un raccord comprenant une douille 1 qui forme le corps du raccord et qui est destinée à être fixée à l'extrémité d'un tuyau non représenté, d'un conduit, d'une tubulure ou analogue, et un embout mâle 2 destiné à être fixé à l'extrémité de l'autre tuyau ou analogue à accoupler au premier.

Sur la douille 1 est montée une bague 3 qui peut coulisser axialement autour de ladite douille entre une rondelle d'extrémité 4 et un épaulement annulaire 5 de la douille.

La douille 1 présente de façon connue en soi, dans sa partie avant, des perçages radiaux 6 dans lesquels sont logées les billes 7 de verrouillage. Ces billes 7 sont repoussées vers l'intérieur de la douille 1, de façon à faire saillie à l'intérieur de l'alésage de cette douille par la bague extérieure 3, l'échappement des billes étant empêché de façon connue par un profilage approprié du bord intérieur des perçages 6.

La bague 3 est soumise à la sollicitation d'un ressort 8 prenant appui sur des épaulements appropriés de la bague 3 et de la douille 1. Elle présente intérieurement une portée 9 repoussant les billes 7 vers l'intérieur et une rampe 10 permettant le déplacement radial de ces billes vers l'extérieur pour leur effacement.

Un deuxième jeu de billes 11 est prévu de façon connue, en avant des billes 7, pour assurer l'effacement vers l'arrière de la bague 3 lors de l'introduction de l'embout 2 dans la douille 1. Ces billes 11 se trouvent en regard de la rampe 10 et lorsque l'embout 2 pénètre dans la douille 1, il les repousse vers l'extérieur. Elles provoquent alors le retrait de la bague 3, la portée 9 s'effaçant pour libérer les billes 7, autorisant ainsi l'introduction automatique de l'embout 2.

Lorsque l'épaulement annulaire 12 de l'embout 2 a dépassé les billes 7, celles-ci sont ramenées vers l'intérieur dans la gorge annulaire 27 de l'embout, au cours du mouvement d'avance de la bague 3 sous l'action du ressort 8 et elles sont de nouveau bloquées en position de verrouillage par la portée 9.

Le raccord se trouve alors accouplé et verrouillé. Dans les raccords à éléments compatibles par construction, le bord avant de l'embout se trouve alors en appui sur un joint torique d'étanchéité tel que 13 disposé dans une rainure de la douille 1, de façon à assurer l'étanchéité du raccord à basse pression.

Si les éléments du raccord ne sont pas compatibles par construction, on peut se trouver devant une impossibilité d'accouplement. Le cas le plus fréquent est celui dans lequel l'embout 2 présente une course d'encliquetage plus grande que celle acceptable par la douille. L'embout 2' représenté à la partie inférieure de la figure est dans ce cas : sa partie 14' située en avant de l'épaulement 12' est plus longue que la partie 14 correspondante de l'embout 2 de la partie supérieure de la figure.

Dans le cas classique où le joint torique 13 est fixe, un tel embout ne peut pas être raccordé, avec verrouillage, à la douille 1.

Pour éviter cet inconvénient, l'invention prévoit pour le joint torique 13 une portée non fixe 15 soumise à la sollicitation d'un ressort 16 prenant appui sur une assise 17 perpendiculaire à l'axe de la douille 1. La portée 15 est constituée par une coupelle sensiblement cylindrique, dont le fond est partiellement ouvert par un trou central 18 par exemple. Cette coupelle a son bord 19, opposé au joint torique, évasé vers l'extérieur de façon à coopérer avec une butée 20 prévue dans la paroi intérieure de la douille.

Ainsi, en l'absence d'embout, la coupelle est maintenue en avant par le ressort 16, son bord arrière 19 étant en appui sur la butée 20. Le joint torique 13 est alors pratiquement en appui sur une butée annulaire 21 prévue dans la paroi intérieure de la douille 1. Le fond de la coupelle est conformé pour soutenir le joint torique.

L'assise 17 du ressort 16 est constituée par exemple par une grille circulaire insérée dans un évidement annulaire 22 prévu dans la paroi intérieure de la douille 1. Cette grille est de préférence constituée par une cloison déformable, ou un joint plat, en matière plastique ou en caoutchouc par exemple, munie, pour le passage du fluide dans le raccord, d'ouvertures constituées par exemple par des trous circulaires 23 régulièrement répartis.

Selon l'exemple de réalisation décrit, la coupelle peut se déplacer axialement à l'intérieur d'un alésage 24 de la paroi intérieure de la douille, et son bord 19 peut se déplacer de la même manière à l'intérieur d'un autre alésage 25 de la douille, dont le diamètre est légèrement plus important que celui du premier alésage.

Si un embout 2', doté d'une course d'encliquetage plus longue que celle de l'embout 2 est introduit dans la douille, son chanfrein avant 26' repousse le joint torique 13 et la coupelle 15 en comprimant le ressort 16, jusqu'à ce que son épaulement 12' ait franchi les billes 7 de verrouillage. Le joint 13 et la coupelle 15 se trouvent alors dans une position telle que celle représentée sur la partie inférieure de la figure.

On voit ainsi qu'on peut adapter à la douille 1 des embouts dont les courses d'encliquetage diffèrent de plusieurs millimètres, tout en assurant par le joint torique 13 l'étanchéité à basse pression du raccord, et tout en assurant le verrouillage automatique du raccord.

Si l'on veut désaccoupler les deux tuyaux au niveau du raccord, il suffit de ramener manuellement la bague 3 en arrière en comprimant le ressort 8. Les billes 7 sont alors libérées et l'embout 2 ou 2' peut être retiré de la douille en laissant le joint torique 13 et la coupelle 15 sensiblement dans la position du haut de la figure .

Afin d'assurer un verrouillage efficace, en évitant que,sous l'action de vibrations ou d'efforts mécaniques répétés, la bague 3 ne soit repoussée en comprimant le ressort 8 jusqu'à autoriser la libération des billes 7 et le désaccouplement du raccord, on a prévu que la portée 9 de ladite bague 3 soit légèrement inclinée sur l'axe de la douille, avec une pente de sens opposé à celle de la rampe 10. Avec cette disposition, si le tuyau fixé à l'embout 2 est soumis à une sollicitation tendant à l'écarter de l'axe du raccord vers le bas de la figure par exemple, la bille 7 représentée en haut de la figure aura tendance à solliciter la bague 3 vers la gauche de la figure, en raison de la pente de la portée 9. Réciproquement, la bille 11 située en bas de la figure (et représentée en pointillé en haut de la même figure) aura tendance à solliciter la bague 3 vers la droite en raison de la pente de la rampe 10. La bague 3 sera donc soumise à un couple de rotation qui la laissera dans sa position moyenne de verrouillage du raccord.

Il est clair que des variantes ou modifications peuvent être apportées au mode de réalisation décrit sans sortir du cadre de l'invention. De plus, certains moyens ne concernant pas directement l'invention ne sont pas décrits. C'est ainsi que par exemple, il peut y avoir des moyens pour assurer automatiquement l'obturation du conduit en charge qui généralement porte la douille, lors de la séparation de la douille et de l'embout, afin d'éviter un écoulement de fluide à partir dudit conduit.

REVENDICATIONS

1. Raccord rapide à verrouillage automatique pour tuyaux ou analogues, comportant une douille (1) destinée à être fixée à l'un des tuyaux à accoupler et présentant des logements (6) pour recevoir des moyens de verrouillage (7), une bague (3) montée coulissante axialement sur la douille pour permettre le désaccouplement du raccord ainsi qu'un embout mâle (2) destiné à être fixé sur l'autre tuyau à accoupler, ledit embout étant muni d'une gorge annulaire (27) apte à recevoir les moyens de verrouillage (7) en position d'accouplement tandis que des moyens sont prévus pour assurer l'étanchéité entre l'embout (2) et la douille (1) en position d'accouplement, caractérisé en ce que lesdits moyens d'étanchéité sont montés coulissants à l'intérieur de la douille 1 et prennent appui en permanence sur une portée (15) coulissant axialement à l'intérieur de la douille (1) contre l'action d'une sollicitation élastique dirigée vers lesdits moyens d'étanchéité.

2. Raccord rapide selon la revendication 1, caractérisé en ce que lesdits moyens d'étanchéité sont constitués par un joint torique (13) et la portée mobile (15) est constituée par une coupelle sensiblement cylindrique dont le fond est partiellement ouvert.

3. Raccord rapide selon la revendication 2, caractérisé en ce que le bord (19) de la coupelle (15) opposé au joint torique (13) est évasé vers l'extérieur de façon à coopérer avec une butée (20) prévue dans la paroi intérieure de la douille (1).

4. Raccord rapide selon la revendication 1, caractérisé en ce que la sollicitation élastique est assurée par un ressort spiral (16) coaxial à la douille (1), prenant appui d'une part dans le fond de la coupelle (15) en regard du joint torique (13) et d'autre part sur une assise (17) montée transversalement à l'axe de la douille (1).

5. Raccord rapide selon la revendication 4, caractérisé en ce que l'assise (17) du ressort (16) est constituée par une grille circulaire insérée dans un évidement annulaire (22) prévu dans la paroi intérieure de la douille (1).

6. Raccord rapide selon la revendication 5, caractérisé en ce que la grille est constituée par une cloison déformable munie d'ouvertures pour le passage du fluide dans le raccord.

7. Raccord rapide selon l'une des revendications 1 à 6, caractérisé en ce que la bague (3) montée coulissante axialement sur la douille est munie d'une portée (9) inclinée sur l'axe de la douille dans le sens opposé à celui de la rampe (10).

**0079274**

Numéro de la demande

Office européen
des brevets

**RAPPORT DE RECHERCHE EUROPEENNE**

EP  82 40 1997

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | F 16 L  37/22 |
| A | US-A-2 824 755  (LAMPHEAR) *Figures 1,2* | 1,2,4-6 | |
| A | US-A-2 730 382  (DE MASTRI) *Figures 1-3* | 1 | |
| A | US-A-3 334 659  (MAGORIEN) *Figure 1* | 1 | |
| A | US-A-3 279 497  (NORTON) *Figure 1* | 2 | |
| | ----- | | |

DOMAINES TECHNIQUES
RECHERCHES (Int. Cl. ³)

F 16 L

Le présent rapport de recherche a été établi pour toutes les revendications

| Lieu de la recherche | Date d'achèvement de la recherche | Examinateur |
|---|---|---|
| LA HAYE | 02-02-1983 | ANGIUS P. |